(19) Europäisches Patentamt

European Patent Office

Office européen des brevets

(11) **EP 1 125 967 B1**

(12) **EUROPÄISCHE PATENTSCHRIFT**

(45) Veröffentlichungstag und Bekanntmachung des Hinweises auf die Patenterteilung:
**05.04.2006 Patentblatt 2006/14**

(51) Int Cl.:
***C08J 5/18*** (2006.01)  ***B32B 27/36*** (2006.01)

(21) Anmeldenummer: **01102785.1**

(22) Anmeldetag: **09.02.2001**

(54) **Weiss-opake Folie mit niedriger Transparenz aus einem kristallisierbaren Thermoplasten**

White opaque film with low transparency, made from a crystallizable thermoplastic polymer

Feuille blanche opaque qui présente une faible transparence, à base d'un thermoplastique crystallisable

(84) Benannte Vertragsstaaten:
**DE FR GB IT LU**

(30) Priorität: **19.02.2000 DE 10007671**

(43) Veröffentlichungstag der Anmeldung:
**22.08.2001 Patentblatt 2001/34**

(73) Patentinhaber: **Mitsubishi Polyester Film GmbH 65203 Wiesbaden (DE)**

(72) Erfinder:
• **Murschall, Ursula, Dr.**
  **55283 Nierstein (DE)**
• **Kern, Ulrich, Dr.**
  **55218 Ingelheim (DE)**
• **Oberländer, Klaus**
  **65207 Wiesbaden (DE)**
• **Hilkert, Gottfried, Dr.**
  **55291 Saulheim (DE)**

(74) Vertreter: **Schweitzer, Klaus et al Zounek Plate Schweitzer Patentanwaltskanzlei Rheingaustrasse 196 65203 Wiesbaden (DE)**

(56) Entgegenhaltungen:
**EP-A- 0 857 749      US-A- 4 780 402**
**US-A- 5 660 931**

**Beschreibung**

Die Erfindung betrifft eine weiß-opake Folie mit niedriger Transparenz aus einem kristallisierbaren Thermoplasten, deren Dicke im Bereich von 10 bis 500 $\mu$m liegt. Die Folie enthält mindestens Bariumsulfat sowie einen optischen Aufheller und zeichnet sich durch eine gute Verstreckbarkeit, durch eine niedrige Transparenz sowie sehr gute optische und mechanische Eigenschaften aus. Die Erfindung betrifft ferner ein Verfahren zur Herstellung dieser Folie und ihre Verwendung.

Opake Folien mit einer Dicke zwischen 10 und 500 $\mu$m sind hinreichend bekannt

Die US-A 9,780,402 beschreibt bereits eine Polyesterfolie die als weißpigment Bariumsulfat enthält und die zusätzlich noch mit einem optischen Aufheller ausgerüstet ist. Die US-A beschreibt aber auch, dass die Folie mit diesen Additiven eine negative Gelbzahl besitzt, was somit einem blaustichigen Aussehen der Folie entspricht. Die Folie nach der US-A besitzt ein hohes Maß an Opazität, die insbesondere durch das Entstehen von Hohlräumen in der Polymermatrix rund um die eingelagerten Partikel der Additive hervorgerufen wird. Diese zahlreichen Hohlräume rund um die eingelagerten Partikel der Additive wirken sich allerdings nachteilig auf die mechanischen Eigenschaften der Folie aus.

Aufgabe der vorliegenden Erfindung war es, eine weiß-opake Folie mit einer Dicke von 10 bis 500 $\mu$m bereitzustellen, die neben einer guten Verstreckbarkeit, guten mechanischen sowie optischen Eigenschaften, einer niedrigen Gelbzahl vor allem einen hohen Weißgrad sowie eine niedrige Transparenz aufweist.

Zu den guten optischen Eigenschaften zählen beispielsweise eine homogene, streifenfreie Einfärbung über die gesamte Folienlänge und Folienbreite, eine niedrige Lichttransmission/Transparenz ($\leq$ 30%), ein akzeptabler Oberflächenglanz ($\geq$ 10), sowie eine niedrige Gelbzahl (dickenabhängig, $\leq$ 45 bei 250 $\mu$m-Folien und $\leq$ 20 bei 50 $\mu$m Follen).

Zu den guten mechanischen Eigenschaften zählt unter anderem ein hoher E-Modul ($E_{MD} \geq$ 3300 N/mm$^2$; $E_{TD} \geq$ 4200 N/mm$^2$) sowie gute Reißfestigkeitswerte (in MD $\geq$ 120 N/mm$^2$; In TD $\geq$ 170 N/mm$^2$) und gute Reißdehnungswerte in Längs- und in Quer richtung (in MD $\geq$ 120 %; in TD $\geq$ 50 %).

Zu der guten Verstredcbarkeit zählt, daß sich die Folie bei ihrer Herstellung sowohl in Längs- als auch in Querrichtung hervorragend und ohne Abrisse orientieren läßt.

Darüber hinaus sollte die erfindungsgemäße Folie rezyklierbar sein, d.h. daß während der Follenherstellung im laufenden Betrieb anfallendes Verschnittmaterial wieder als Regenerat in den Produktionsbetrieb zurückgeschleust werden kann, insbesondere ohne Verlust der optischen und der mechanischen Eigenschaften, damit sie beispielsweise auch für Innen anwendungen und im Messebau eingesetzt werden kann.

Gelöst wird diese Aufgabe durch eine weiß-opake Folie mit einer Dicke im Bereich von 10 bis 500 $\mu$m, die als Hauptbestandteil einen kristallisierbaren Thermoplasten enthält, mindestens Bariumsulfat und mindestens einen optischen Aufheller

und die dadurch gekennzeichnet ist, dass die Folie

- einen E-Modul in Längsrichtung von größer/gleich 3300 N/mm$^2$ und
- einen E-Modul in Querrichtung von gröBer/gleich 4200 N/mm$^2$ besitzt und daß das Bariumsulfat und/oder der optische Aufheller entweder direkt beim Rohstoffnersteller in den Thermoplasten eingearbeitet werden können oder als Masterbatch bei der Folienherstellung zudosiert werden.

Die Folie gemäß der Erfindung enthält als Hauptbestandteil einen kristallisierbaren Thermoplasten. Geeignete kristallisierbare bzw. teilkristalline Thermoplaste sind beispielsweise Polyothylenterephthalat Polybutylenterephthalat, Polyethylennaphthalat, wobei Polyethylenterephthalat bevorzugt ist.

Erfindungsgemäß versteht man unter kristallisierbarem Thermoplasten

- kristallisierbare Homopolymere;
- kristallisierbare Copolymere;
- kristallisierbare Compounds;
- kristallisierbares Rezyklat und
- andere Variationen von kristallisierbaren Thermoplasten.

Die Folie gemäß der Erfindung kann sowohl einschichtig als auch mehrschichtig sein, und sie kann mit diversen Copolyestem oder Haftvermittlem beschichtet sein.

Die Folie enthält mindestens Bariumsulfat als Pigment, wobei die Menge an Pigment vorzugsweise im Bereich zwischen 0,2 und 40 Gew.-%, bezogen auf das Gewicht des kristallisierbaren Thermoplasten, liegt. Vorzugsweise wird das Bariumsulfat über die sogenannte Masterbatch-Technologie bei der Folienherstellung dem Thermoplasten zudosiert.

Die Folie enthält mindestens einen optischen Aufheller, wobei der optische Aufheller in Mengen im Bereich von 10 bis 50.000 ppm, insbesondere von 20 bis 30.000 ppm, besonders bevorzugt von 50 bis 25.000 ppm, bezogen auf das Gewicht des kristallisierbaren Thermoplasten, eingesetzt wird. Vorzugsweise wird auch der optische Aufheller über die sogenannte Masterbatch-Technologie bei der Folienherstellung dem Thermoplasten zudosiert.

Die erfindungsgemäßen optischen Aufheller sind in der Lage, UV-Strahlen im Bereich von 360 bis 380 nm zu absorbieren und als längerwelliges, sichtbares blauviolettes Licht wieder abzugeben.

Geeignete optische Aufheller sind Bis benzoxazole, Phenylcumarine und Bissterylbiphenyle, insbesondere Phenylcumarin, besonders bevorzugt sind Triazin-phenylcumarin, die unter der Produktbezeichnung ®Tinopal bei Ciba-Geigy, Basel, Schweiz, erhältlich sind, oder ®Hostalux KS (Clariant, Deutschland) sowie ®Eastobrite OB-1 (Eastman).

Sofern zweckmäßig können neben dem optischen Aufheller auch noch in Polyester lösliche blaue Farbstoffe zugesetzt werden. Als geeignete blaue Farbstoffe haben sich Kobaltblau, Ultramarinblau und Anthrachinonfarbstoffe, insbesondere Sudanblau 2 (BASF, Ludwigshafen, Bundesrepublik Deutschland) erwiesen.

Die blauen Farbstoffe werden in Mengen von 10 bis 10.000 ppm, insbesondere 20 bis 5.000 ppm, besonders bevorzugt 50 bis 1.000 ppm, bezogen auf das Gewicht des kristallisierbaren Thermoplasten, eingesetzt.

Es war völlig überraschend, daß der Einsatz der oben genannten Kombination aus Bariumsulfat, optischem Aufheller und gegebenenfalls blauem Farbstoffen in den Folien in Verbindung mit dem erhöhten Längsstreckverhältnis bei der Folienherstellung zu dem gewünschten Ergebnis führte.

Des weiteren ist sehr überraschend, daß auch das Folienverschnittmaterial als Regenerat wieder für die Folienproduktion einsetzbar ist, ohne den Gelbwert der Folie negativ zu beeinflussen.

In einer bevorzugten Ausführungsform werden gefällte Bariumsulfat-Typen eingesetzt. Gefälltes Bariumsulfat erhält man aus Bariumsalzen und Sulfaten oder Schwefelsäure als feinteiliges farbloses Pulver, dessen Korngröße durch die Fällungsbedingungen zu steuern ist. Gefällte Bariumsulfate können nach den üblichen Verfahren, die in Kunststoff-Journal 8, Nr. 10, 30-36 und Nr. .11, 36-31 (1974) beschrieben sind, hergestellt werden.

Die Menge an Bariumsulfat beträgt zweckmäßigerweise 0,2 bis 40 Gew.-%, vorzugsweise 0,5 bis 30 Gew.-%, besonders bevorzugt 1 bis 25 Gew.-%, bezogen auf das Gewicht des Thermoplasten.

Die mittlere Teilchengröße des Bariumsulfats ist relativ klein und liegt vorzugsweise im Bereich von 0,1 bis 5 $\mu$m, besonders bevorzugt im Bereich von 0,2 bis 3 $\mu$m (Sedigraphmethode). Die Dichte des verwendeten Bariumsulfates liegt zwischen 4 und 5 g/cm$^3$.

In einer besonders bevorzugten Ausführungsform enthält die erfindungsgemäße Folie als Hauptbestandteil ein kristallisierbares Polyethylenterephthalat sowie 1 bis 25 Gew.-% gefälltes Bariumsulfat, zweckmäßigerweise mit einem Teilchendurchmesser von 0,4 bis 1 $\mu$m, wobei ®Blanc fixe XR-HX oder Blanc fixe HXH von der Firma Sachtleben Chemie besonders bevorzugt wird.

Des weiteren enthält die erfindungsgemäße Folie vorzugsweise 10 bis 50.000 ppm eines optischen Aufhellers, der in dem kristallisierbaren Thermoplasten löslich ist, wobei Triazin-phenylcumarin (Tinopal, Ciba-Geigy, Basel, Schweiz), Hostalux KS sowie Eastobrite OB-1 (Eastman) besonders bevorzugt sind.

Der Oberflächenglanz der erfindungsgemäßen weiß-opaken Folie, gemessen nach DIN 67530 (Meßwinkel 20°) ist größer/gleich 10, vorzugsweise größer/gleich 15.

Die Lichttransmission (Transparenz) der erfindungsgemäßen weiß-opaken Folie, gemessen nach ASTM-D 1003, ist kleiner/gleich 30 %, vorzugsweise kleiner/gleich 25 %. Die Einfärbung ist homogen und streifenfrei über die gesamte Lauflänge und Folienbreite.

Durch die synergistische Wirkung der Additive Bariumsulfat, optischer Aufheller, und gegebenenfalls blauem Farbstoff in Verbindung mit optimierten Längsstreckbedingungen ist die Folie weißer, d.h. weniger gelbstichig, und weniger lichtdurchlässig, d.h. sie hat eine niedrigere Transparenz als eine nur mit Bariumsulfat ausgerüstete Folie.

Der E-Modul (ISO 527-1-2) der erfindungsgemäßen weiß-opaken Folie in Längsrichtung liegt bei größer/gleich 3300 N/mm$^2$, vorzugsweise bei größer/gleich 3500 N/mm$^2$. Ihr E-Modul (ISO 527-1-2) in Querrichtung liegt bei größer/gleich 4200 N/mm$^2$, vorzugsweise bei größer/gleich 4400 N/mm$^2$

Die Standardviskosität SV (DCE) des Polyethylenterephthalats, gemessen in Dichloressigsäure nach DIN 53728, liegt im Bereich zwischen 600 und 1100, vorzugsweise zwischen 700 und 1000.

Die intrinsische Viskosität IV (DCE) berechnet sich aus der Standardviskosität SV (DCE) wie folgt:

$$IV\ (DCE) = 6{,}67 \cdot 10^{-4}\ SV\ (DCE) + 0{,}118$$

Die weiß-opake Polyethylenterephtalat-Folie, die mindestens Bariumsulfat, einen optischen Aufheller und gegebenenfalls blauen Farbstoffe enthält, kann sowohl einschichtig als auch mehrschichtig sein.

In der mehrschichtigen Ausführungsform ist die Folie aus mindestens einer Kemschicht und mindestens einer Deckschicht aufgebaut, wobei insbesondere ein dreischichtiger A-B-A oder A-B-C Aufbau bevorzugt ist.

Für die mehrschichtige Ausführungsform ist es wesentlich, daß das Polyethylenterephthalat der Kemschich eine ähnliche Standardviskosität besitzt wie das Polyethylenterephthalat der Deckschicht(en), die an die Kemschicht angrenzt(angrenzen).

In einer besonderen Ausführungsform können die Deckschichten auch aus einem Polyethylennaphthalat-Homopolymeren oder aus einem Polyethylenterephthalat-Polyethylennaphthalat-Copolymeren oder einem Compound bestehen. In dieser besonderen Ausführungsform haben die Thermoplasten der Deckschichten ebenfalls eine ähnliche Standardviskosität wie das Polyethylenterephthalat der Kernschicht.

In der mehrschichtigen Ausführungsform sind das Bariumsulfat sowie der optische Aufheller und gegebenenfalls der blaue Farbstoff vorzugsweise in der Kernschicht enthalten. Bei Bedarf können aber auch die Deckschichten ausgerüstet sein.

Anders als in der einschichtigen Ausführungsform bezieht sich bei der mehrschichtigen Ausführungsform die Mengenangabe der Additive auf das Gewicht der Thermoplasten in der mit dem/den Additiven ausgerüsteten Schicht.

Die Folie kann auch mindestens einseitig mit einer kratzfesten Beschichtung, mit einem Copolyester oder mit einem Haftvermittler versehen sein.

Des weiteren ist die erfindungsgemäße Folie ohne Umweltbelastung und ohne Verlust der mechanischen Eigenschaften problemlos rezyklierbar, wodurch sie sich beispielsweise für die Verwendung als kurzlebige Werbeschilder, Labels oder anderer Werbeartikel eignet.

Die Herstellung der erfindungsgemäßen Folie kann beispielsweise nach einem Extrusionsverfahren in einer Extrusionsstraße erfolgen.

Erfindungsgemäß können das Bariumsulfat, der optische Aufheller und gegebenenfalls der blaue Farbstoff direkt beim Thermoplast-Rohstoffhersteller eingearbeitet werden oder bei der Folienherstellung in den Extruder über die Masterbatch Technologie zudosiert werden. Bevorzugt ist die Zudosierung des Bariumsulfats, des optischen Aufhellers und gegebenenfalls des blauen Farbstoffes über die Masterbatch-Technologie. Die Additive werden in einem festen Trägermaterial voll dispergiert. Als Trägermaterialien kommen der Thermoplast selbst, wie z. B. das Polyethylenterephthalat oder auch andere Polymere, die mit dem Thermoplasten ausreichend verträglich sind, in Frage.

Wichtig ist, daß die Korngröße und das Schüttgewicht des/der Masterbatches ähnlich der Korngröße und dem Schüttgewicht des Thermoplasten ist, so daß eine homogene Verteilung und damit eine homogener Weißgrad und somit eine homogene Opazität erreicht werden.

Die Polyesterfolien können nach bekannten Verfahren aus einem Polyesterrohstoff mit ggf. weiteren Rohstoffen sowie dem optischen Aufheller, dem Bariumsulfat, gegebenenfalls dem blauen Farbstoff und/oder weiteren üblichen Additiven in üblicher Menge von 0,1 bis maximal 10 Gew.-% sowohl als Monofolien als auch als mehrschichtige, ggf. koextrudierte Folien mit gleichen oder unterschiedlich ausgebildeten Oberflächen hergestellt werden, wobei eine Oberfläche beispielsweise pigmentiert ausgerüstet ist und die andere Oberfläche kein Pigment enthält. Ebenso können eine oder beide Oberflächen der Folie nach bekannten Verfahren mit einer üblichen funktionalen Beschichtung versehen werden.

Bei dem bevorzugten Extrusionsverfahren zur Herstellung der Polyesterfolie wird das aufgeschmolzene Polyestermaterial durch eine Schlitzdüse extrudiert und als weitgehend amorphe Vorfolie auf einer Kühlwalze abgeschreckt. Diese Folie wird anschließend erneut erhitzt und in Längs- und Querrichtung bzw. in Quer- und in Längsrichtung bzw. in Längs-, in Quer- und nochmals in Längsrichtung und/oder Querrichtung gestreckt. Die Strecktemperaturen liegen erfindungsgemäß bei $T_g$ + 10 K bis $T_g$ + 60 K (mit $T_g$ = Glastemperatur), das Streckverhältnis der Längsstreckung liegt erfindungsgemäß im Bereich von 2. bis 5, insbesondere von 2,5 bis 4,5, das der Querstreckung im Bereich von 2 bis 5, insbesondere von 3 bis 4,5, und das der ggf. durchgeführten zweiten Längsstreckung von 1,1 bis 3. Die erste Längsstreckung kann ggf. gleichzeitig mit der Querstreckung (Simultanstreckung) durchgeführt werden. Anschließend folgt die Thermofixierung der Folie bei Ofentemperaturen im Bereich von 200 bis 260 °C, insbesondere von 220 bis 250 °C. Anschließend wird die Folie abgekühlt und aufgewickelt.

Es hat sich völlig unerwartet herausgestellt, daß die Verfahrensparameter der Längsstreckung eine wesentliche Einflussgröße darstellen, von der die optischen Eigenschaften (Transparenz) der Folie abhängen. Zu den Verfahrensparametern der Streckung in Längsrichtung gehören insbesondere das Längsstreckverhältnis und die Längsstrecktemperatur. Völlig überraschend konnte durch Variation des Längsstreckverhältnisses die Transparenz stark beeinflusst werden. Erhält man beispielsweise auf einer Folienanlage eine Folie, deren Transparenzwerte oberhalb der erfindungsgemäßen Werte liegen, so können erfindungsgemäße Folien mit niedrigerer Transparenz hergestellt werden, indem man in der Längsstreckung das Längsstreckverhältnis erhöht. Eine Erhöhung des Längsstreckverhältnisses um relativ 7 % ergab eine Reduzierung der Transparenz um relativ 15 bis 20 %.

Durch die überraschende Kombination ausgezeichneter Eigenschaften eignet sich die erfindungsgemäße Folie hervorragend für eine Vielzahl verschiedener Anwendungen, beispielsweise für Innenraumverkleidungen, für den Messebau und Messeartikel, für Displays, für Schilder, für Etiketten, für Schutzverglasungen von Maschinen und Fahrzeugen, im Beleuchtungssektor, im Laden- und Regalbau, als Werbeartikel, Kaschiermedium und in Lebensmittelanwendungen.

Die Erfindung wird im folgenden anhand von Ausführungsbeispielen näher erläutert.

Die Messung der einzelnen Eigenschaften erfolgt dabei gemäß der folgenden Normen bzw. Verfahren.

**Meßmethoden**

**Oberflächenglanz**

Der Oberflächenglanz wird bei einem Meßwinkel von 20° nach DIN 67530 gemessen.

**Lichttransmission/Transparent**

Unter der Lichttransmission/Transparenz ist das Verhältnis des insgesamt durchgelassenen Lichtes zur einfallenden Lichtmenge zu verstehen.
Die Lichttransmission wird mit dem Messgerät "Hazegard plus" nach ASTM D 1003 gemessen.

**Oberflächen defekte, homogene Einfärbung**

Die Oberflächendefekte und die homogene Einfärbung werden visuell bestimmt.

**Mechanische Eigenschaften**

Der E-Modul, die Reißfestigkeit und die Reißdehnung werden in Längs- und Querrichtung nach ISO 527-1-2 gemessen.

**SV (DCE), IV (DCE)**

Die Standardviskosität SV (DCE) wird angelehnt an DIN 53726 in Dichloressigsäure gemessen.
Die intrinsische Viskosität (IV) berechnet sich wie folgt aus der Standardviskosität (SV)

$$IV\ (DCE) = 6{,}67 \cdot 10^{-4}\ SV\ (DCE) + 0{,}118$$

**Gelbwert**

Der Gelbwert YID ist die Abweichung von der Farblosigkeit in Richtung "Gelb" und wird gemäß DIN 6167 gemessen.

**Weißgrad**

Der Weißgrad wird nach Berger bestimmt, wobei in der Regel mehr als 20 Folienlagen aufeinander gelegt werden. Die Bestimmung des Weißgrades erfolgt mit Hilfe des elektrischen Remissionsphotometers ®ELREPHO der Firma Zeiss, Oberkochem (DE), Normlichtart C, 2° Normalbeobachter. Der Weißgrad wird als WG = RY + 3RZ - 3RX definiert.
WG = Weißgrad, RY, RZ, RX = entsprechende Reflexionsfaktoren bei Einsatz des Y-, Z- und X-Farbmessfilters. Als Weißstandard wird ein Pressling aus Bariumsulfat (DIN 5033, Teil 9) verwendet. Eine ausführliche Beschreibung ist zB. in Hansl Loos "Farbmessung", Verlag Beruf und Schule, Itzehoe (1989), beschrieben.
In den nachstehenden Beispielen und Vergleichsbeispielen handelt es sich jeweils um einschichtige weiß-opake Folien, die auf der beschriebenen Extrusionsstraße hergestellt werden.

**Beispiel 1**

Es wurde eine 50 μm dicke, weiß-opake Folie hergestellt, die als Hauptbestandteil Polyethylenterephthalat (RT32, KoSa, Deutschland), 18 Gew.-% Bariumsulfat (Blanc fixe XR-HX, Sachtleben Chemie), 200 ppm optischen Aufheller (Tinopal, Ciba-Geigy, Basel) und 40 ppm blauen Farbstoff (Sudanblau 2, BASF Ludwigshafen) enthielt.
Die Additive Bariumsulfat, optischer Aufheller und blauer Farbstoff wurden als Masterbatches zugegeben. Das Polyethylenterephthalat, das zur Herstellung der Masterbatche verwendet wurde, hatte eine Standardviskosität SV (DCE) im Bereich von 900 bis 1100.
Das Masterbatch (1) setzte sich aus Klarrohstoff, 50 Gew.% Bariumsulfat und 600 ppm optischem Aufheller zusammen: Das Masterbatch (2) enthielt neben Klarrohstoff 2000. ppm blauen Farbstoff.
Vor der Extrusion wurden 36 Gew.-% von Masterbatch (1), 2 Gew.-% von Masterbatch (2), und 62 Gew.-%

Klarrohstoff bei einer Temperatur von 150 °C getrocknet und anschließend im Extruder aufgeschmolzen.

Das bei der Folienherstellung eingestellte Längsstreckverhältnis betrug exakt 3,1.

**Beispiel 2**

Beispiel 1 wurde wiederholt. Die Folie wurde jedoch nicht mit blauem Farbstoff ausgerüstet.

**Beispiel 3**

Die Rezepturierung entsprach der des Beispiels 2. Das Längsstreckverhältnis war allerdings auf 3,3 erhöht, während die eingestellten Längstrecktemperaturen unverändert blieben.

**Beispiel 4**

Es wurde eine 75 $\mu$m dicke, koextrudierte weiß-opake ABA-Folie hergestellt, wobei A die Deckschichten und B die Kernschicht symbolisiert. Die Rezeptur der 71 $\mu$m dicken Kemschicht entsprach der Rezeptur des Beispiels 2. Die 2 $\mu$m dicken Deckschichten enthielten 93 Gew.-% Klarrohstoff sowie 7 Gew.% eines Masterbatches, das neben Klarrohstoff 10.000 ppm Siliciumdioxid (®Sylobloc, Grace, Deutschland) enthielt. Diese Folie zeichnete sich durch einen ganz besonders hohen Oberflächenglanz aus. Das Längsstreckverhältnis betrug 3,3.

**Vergleichsbeispiel 1**

Beispiel 3 wurde wiederholt. Das Längsstreckverhältnis wurde auf 2,8 reduziert, die eingestellten Längstrecktemperaturen blieben aber unverändert.

**Vergleichsbeispiel 2.**

Vergleichsbeispiel 1 wurde wiederholt. Die Folie wurde jedoch nicht mit optischem Aufheller ausgerüstet. Die Folie enthielt nur 18 Gew.-% Bariumsulfat, das beim Rohstoffhersteller direkt eingearbeitet worden war. Die Standardviskosität des Bariumsulfat enthaltenden Rohstoffes betrug 810.

Die nach den Beispielen 1 bis 4 hergestellten weiß-opaken PET-Folien und die Folien nach den Vergleichsbeispielen 1 und 2 hatten das in der nachfolgenden Tabelle illustrierte Eigenschaftsprofil:

**Tabelle**

| Eigenschaften | Bsp. 1 | Bsp. 2 | Bsp.3 | Bsp.4 | Vgl.- Bsp. 1 | Vgl.-Bsp. 2 |
|---|---|---|---|---|---|---|
| Dicke [$\mu$m] | 50 | 50 | 50 | 75 | 50 | 50 |
| Oberflächenglanz 1. Seite | 20 | 20 | 20 | 165 | 20 | 20 |
| (Meßwinkel 20°) 2. Seite | 20 | 20 | 20 | 165 | 20 | 20 |
| Lichttransmission/ Transparenz [%] | 20 | 20 | 16 | 12 | 25 | 24 |
| Gelbzahl (YID) | 12 | 14 | 14 | 18 | 15 | 24 |
| Weißgrad nach Berger [%] | 93 | 91 | 91 | 90 | 91 | 84 |
| E-Modul längs [N/mm$^2$] | 3600 | 3600 | 3650 | 3650 | 3350 | 3500 |
| E-Modul quer [N/mm$^2$] | 5200 | 5300 | 5200 | 5300 | 5300 | 5300 |
| Reißfestigkeit längs [N/mm$^2$] | 150 | 155 | 155 | 150 | 150 | 150 |
| Reißfestigkeit quer [N/mm$^2$] | 240 | 240 | 235 | 240 | 250 | 250 |

Tabelle fortgesetzt

| Eigenschaften | Bsp. 1 | Bsp. 2 | Bsp.3 | Bsp.4 | Vgl.- Bsp. 1 | Vgl.-Bsp. 2 |
|---|---|---|---|---|---|---|
| Reißdehnung längs [%] | 180 | 175 | 175 | 170 | 180 | 175 |
| Reißdehnung quer [%] | 70 | 75 | 75 | 75 | 70 | 80 |
| Einfärbung | strahlend weiß | strahlend weiß | strahlend weiß | strahlend weiß | strahlend weiß | gelbstichig |

**Patentansprüche**

1. Weiß-opake Folie mit einer Dicke im Bereich von 10 bis 500 μm, die als Hauptbestandteil einen kristallisierbaren Thermoplasten enthält, mindestens Bariumsulfat und mindestens einen optischen Aufheller **dadurch gekennzeichnet, dass** die Folie

= einen E-Modul in Längsrichtung von größer/gleich 3300 N/mm$^2$ und

= einen E-Modul in Querrichtung von größer/gleich 4200 N/mm$^2$ besitzt und dass das Bariumsulfat und/oder der optische Aufheller entweder beim Rohstoffhersteller in den Thermoplasten eingearbeitet oder als Masterbatch bei der Folienherstellung zudosiert werden.

2. Weiß-opake Folie nach Anspruch 1, **dadurch gekennzeichnet, dass** der kristallisierbare Thermoplast ausgewählt ist aus der Gruppe enthaltend Polyethylenterephthalat, Polybutylenterephthalat und Polyethylennaphthalat.

3. Weiß-opake Folie nach Anspruch 1 oder 2, **dadurch gekennzeichnet, dass** sie Bariumsulfat in einer Menge im Bereich von 0,2 bis 40 Gew.-%, bezogen auf das Gewicht des kristallisierbaren Thermoplasten, enthält und dass das Bariumsulfat dem Thermoplasten über die Masterbatch-Technologie bei der Folienherstellung zudosiert wird.

4. Weiß-opake Folie nach einem der Ansprüche 1 bis 3, **dadurch gekennzeichnet, dass** sie den optische Aufheller in Mengen im Bereich von 10 bis 50.000 ppm, bezogen auf das Gewicht des kristallisierbaren Thermoplasten, enthält und dass der optische Aufheller dem Thermoplasten über die Masterbachtechnologie bei der Folienherstellung zudosiert wird.

5. Weiß-opake Folie nach Anspruch 4, **dadurch gekennzeichnet, dass** der optische Aufheller ausgewählt ist aus der Gruppe enthaltend Bis-benzoxazole, Phenylcumarine und Bis-sterylbiphenyle, insbesondere Triazin-phenylcumarin.

6. Weiß-opake Folie nach einem der Ansprüche 1 bis 5, **dadurch gekennzeichnet, dass** sie zusätzlich einen in Polyester löslichen blauen Farbstoff enthält ausgewählt aus der Gruppe enthaltend Kobaltblau, Ultramarinblau, Anthrachinonfarbstoffe, insbesondere Sudanblau 2, und dass die Menge an blauem Farbstoff im Bereich von 10 bis 10.000 ppm liegt, bezogen auf das Gewicht des kristallisierbaren Thermoplasten.

7. Weiß-opake Folie nach einem der Ansprüche 1 bis 6, **dadurch gekennzeichnet, dass** sie Bariumsulfat als gefälltes Bariumsulfat in Form von feinteiligem farblosem Pulver mit einer mittleren Komgröße im Bereich von 0,1 bis 5 μm, gemessen nach der Sedigraphmethode, enthält.

8. Weiß-opake Folie nach einem der Ansprüche 1 bis 7, **dadurch gekennzeichnet, dass** sie einen Oberflächenglanz, gemessen nach DIN 67530 (Messwinkel 20°) von größer/gleich 10, und eine Lichttransmission (Transparenz), gemessen nach ASTM-D 1003, von kleiner/gleich 30 %, besitzt.

9. Weiß-opake Folie nach einem der Ansprüche 1 bis 8, **dadurch gekennzeichnet, dass** sie einschichtig oder mehrschichtig ist, wobei sie in der mehrschichtigen Ausführungsform mindestens eine Kernschicht und mindestens eine Deckschicht umfasst und wobei ein dreischichtiger A-B-A oder A-B-C Aufbau bevorzugt ist.

10. Weiß-opake Folie nach Anspruch 10, **dadurch gekennzeichnet, daß** in der mehrschichtigen Ausführungsform das Bariumsulfat, der optische Aufheller und gegebenenfalls der blaue Farbstoff in der Kemschicht enthalten sind.

11. Weiß-opake Folie nach Anspruch 10, **dadurch gekennzeichnet, daß** auch die Deckschichten mit Bariumsulfat, optischem Aufheller und gegebenenfalls blauem Farbstoff ausgerüstet sind.

12. Weiß-opake Folie nach einem der Ansprüche 1 bis 11, **dadurch gekennzeichnet, daß** sie mindestens einseitig mit einer kratzfesten Beschichtung, mit einem Copolyester oder mit einem Haftvermittler versehen ist

13. Verfahren zum Herstellen einer weiß-opaken Folie nach einem der Ansprüche 1 bis 12, nach dem Extrusionsverfahren, bei dem das in einem Extruder aufgeschmolzene Thermoplastmatettal verdichtet, durch eine Schlitzdüse extrudiert und als weitgehend amorphe Vorfolie auf einer Kühlwalze abgeschreckt, danach erneut erhitzt und in Längs- und Querrichtung bzw. in Quer- und in Längsrichtung bzw. in Längs-, in Quer- und nochmals in Längsrichtung und/oder Querrichtung gestreckt wird, **dadurch gekennzeichnet, daß** die Strecktemperaturen in einem Bereich von $T_g$ + 10 K bis $T_g$ + 60 K eingestellt werden und daß das Streckverhältnis der Längsstreckung im Bereich von 2 bis 5, das der Querstreckung im Bereich von 2 bis 5, und das der ggf. durchgeführten zweiten Längsstreckung von 1,1 bis 3 eingestellt wird.

14. Verfahren nach Anspruch 13, **dadurch gekennzeichnet, daß** die Thermofixierung der Folie bei Ofentemperaturen im Bereich von 200 bis 260 °C, durchgeführt wird.

15. Verfahren nach Anspruch 13 oder 14, **dadurch gekennzeichnet, daß** die optischen Eigenshaften (Transparenz) der Folie durch Variation der Längsstrecktemperatur und/oder des Längsstreckverhältnisses eingestellt werden.

16. Verwendung einer Folie nach einem der Ansprüche 1 bis 12 für innenraumverkleidungen, für den Messebau und Mosseartikel, für Displays, für Schilder, für Etiketten, für Schutzverglasungen von Maschinen und Fahrzeugen, im Beleuchtungssektor, im Laden- und Regalbau, als Warbeartikel, Kaschiermedium und in Lebensmittelanwendungen.

**Claims**

1. An opaque white film with a thickness of from 10 to 500 $\mu$m which comprises as principal constituent a crystallizable thermoplastic, and at least barium sulfate and at least one optical brightener, and which has

= a longitudinal modulus of elasticity greater than or equal to 3300 N/mm$^2$, and
= a transverse modulus of elasticity greater than or equal to 4200 N/mm$^2$,

wherein the barium sulfate and/or the optical brightener is either incorporated into the thermoplastic during preparation of the polymer or fed in the form of a masterbatch during film production.

2. The opaque white film as claimed in claim 1, wherein the crystallizable thermoplastic has been selected from the group consisting of polyethylene terephthalate, polybutylene terephthalate and polyethylene naphthalate.

3. The opaque white film as claimed in claim 1 or 2, which comprises from 0.2 to 40% by weight of barium sulfate, based on the weight of the crystallizable thermoplastic, wherein the barium sulfate is fed to the thermoplastic by way of masterbatch technology during film production.

4. The opaque white film as claimed in any one of claims 1 to 3, which comprises from 10 to 50,000 ppm, of optical brightener, based on the weight of the crystallizable thermoplastic, wherein the optical brightener is fed to the thermoplastic by way of masterbatch technology during film production.

5. The opaque white film as claimed in claim 4, wherein the optical brightener has been selected from the group consisting of bisbenzoxazoles, phenylcoumarins and bisstyrylbiphenyls, in particular triazine phenylcoumarin.

6. The opaque white film as claimed in any one of claims 1 to 5, which also comprises a polyester-soluble blue dye selected from the group consisting of cobalt blue, ultramarine blue and anthraquinone dyes, in particular Sudan Blue 2, wherein the amount of blue dye is from 10 to 10,000 ppm, based on the weight of the crystallizable thermoplastic.

7. The opaque white film as claimed in any one of claims 1 to 6, which comprises barium sulphate in the form of precipitated barium sulfate as fine-particle colorless powder with average grain size of from 0.1 to 5 $\mu$m, measured

by the Sedigraph method.

**8.** The opaque white film as claimed in any one of claims 1 to 7, whose surface gloss measured to DIN 67530 (measurement angle 20°) is greater than or equal to 10, and whose luminous transmittance (transparency), measured to ASTM-D 1003 is less than or equal to 30%.

**9.** The opaque white film as claimed in any one of claims 1 to 8, which is a single- or multilayer film which in the multilayer embodiment comprises at least one core layer and at least one outer layer, and preference is given to a three-layer A-B-A or A-B-C structure.

**10.** The opaque white film as claimed in claim 10, wherein, in the multilayer embodiment, the barium sulfate, the optical brightener and, if present, the blue dye are present in the core layer.

**11.** The opaque white film as claimed in claim 10, wherein the outer layers, too, have been provided with barium sulfate, optical brightener and, if desired, blue dye.

**12.** The opaque white film as claimed in any one of claims 1 to 11, wherein a scratch-resistant coating, a copolyester or an adhesion promoter has been provided on at least one side of the film.

**13.** A process for producing the opaque white film as claimed in any one of claims 1 to 12 by extrusion, in which the thermoplastic material melted in an extruder is compacted, extruded through a slot die and quenched on a chill roll in the form of a substantially amorphous prefilm, and is then reheated and stretched longitudinally and transversely, or transversely and longitudinally, or longitudinally, transversely and again longitudinally and/or transversely, which comprises establishing the stretching temperatures at from $T_g$ + 10 K to $T_g$ + 60 K and establishing a longitudinal stretching ratio of from 2 to 5, and a transverse stretching ratio of from 2 to 5, and establishing a ratio of from 1.1 to 3 for the second longitudinal stretching which may, if desired, be carried out.

**14.** The process as claimed in claim 13, wherein the heat-setting of the film is carried out at oven temperatures of from 200 to 260°C.

**15.** The process as claimed in claim 13 or 14, wherein the optical properties (transparency) of the film are established by varying the longitudinal stretching temperature and/or the longitudinal stretching ratio.

**16.** The use of a film as claimed in any one of claims 1 to 12 for interior decoration, for constructing exhibition stands, for exhibition requisites, for displays, for placards, for labels, for protective glazing of machines or of vehicles, in the lighting sector, in the fitting out of shops or of stores, as a promotional requisite or a laminating material, or in applications associated with food or drink.

**Revendications**

**1.** Film opaque blanc ayant une épaisseur dans la plage de 10 à 500 $\mu$m, qui contient en tant que composant principal une matière thermoplastique cristallisable, au moins du sulfate de baryum et au moins un azurant optique, **caractérisé en ce que** le film présente

    - un module d'élasticité dans le sens longitudinal de $\geq$ 3 300 N/mm$^2$ et
    - un module d'élasticité dans le sens transversal de $\geq$ 4 200 N/mm$^2$,

**en ce que** le sulfate de baryum et/ou l'azurant optique soit sont incorporés dans la matière thermoplastique chez le fournisseur de matières premières, soit sont ajoutés par addition dosée en tant que mélange-maître lors de la fabrication du film.

**2.** Film opaque blanc selon la revendication 1, **caractérisé en ce que** la matière thermoplastique cristallisable est choisie dans le groupe comprenant le poly(éthylène-téréphtalate), le poly(butylène-téréphtalate) et le poly(éthylène-naphtalate).

**3.** Film opaque blanc selon la revendication 1 ou 2, **caractérisé en ce qu'**il contient du sulfate de baryum en une proportion dans la plage de 0,2 à 40 % en poids, par rapport au poids de la matière thermoplastique cristallisable, et **en ce que** le sulfate de baryum est ajouté à la matière thermoplastique par addition dosée, au moyen de la technique de mélange-maître, lors de la fabrication du film.

4. Film opaque blanc selon l'une quelconque des revendications 1 à 3, **caractérisé en ce qu'**il contient l'azurant optique en proportions dans la plage de 10 à 50 000 ppm, par rapport au poids de la matière thermoplastique cristallisable, et **en ce que** l'azurant optique est ajouté à la matière thermoplastique par addition dosée, au moyen de la technique de mélange-maître, lors de la fabrication du film.

5. Film opaque blanc selon la revendication 4, **caractérisé en ce que** l'azurant optique est choisi dans le groupe comprenant des bis-benzoxazoles, des phénylcoumarines ou des bis-stérylbiphényles, en particulier de la triazine-phénylcoumarine.

6. Film opaque blanc selon l'une quelconque des revendications 1 à 5, **caractérisé en ce qu'**il contient en outre un colorant bleu soluble dans le polyester, choisi dans le groupe comprenant le bleu de cobalt, le bleu outremer, des colorants anthraquinoniques, en particulier du bleu Soudan 2, et **en ce que** la proportion de colorant bleu se situe dans la plage de 10 à 10 000 ppm, par rapport au poids de la matière thermoplastique cristallisable.

7. Film opaque blanc selon l'une quelconque des revendications 1 à 6, **caractérisé en ce qu'**il contient du sulfate de baryum sous forme de sulfate de baryum précipité se présentant comme une poudre incolore finement divisée ayant une taille moyenne de grain dans la plage de 0,1 à 5 $\mu$m (mesurée selon la méthode au sédigraphe).

8. Film opaque blanc selon l'une quelconque des revendications 1 à 7, **caractérisé en ce qu'**il présente un brillant superficiel, mesuré selon DIN 67530 (angle de mesure 20°), supérieur ou égal à 10, et une transmission de la lumière (transparence), mesurée selon ASTM-D 1003, inférieure ou égale à 30 %.

9. Film opaque blanc selon l'une quelconque des revendications 1 à 8, **caractérisé en ce qu'**il est monocouche ou multicouche, celui-ci comportant dans la forme d'exécution multicouche au moins une couche de base et au moins une couche de recouvrement, et une structure tricouche A-B-A ou A-B-C étant préférée.

10. Film opaque blanc selon la revendication 9, **caractérisé en ce que** dans la forme d'exécution multicouche le sulfate de baryum, l'azurant optique et éventuellement le colorant bleu sont contenus dans la couche de base.

11. Film opaque blanc selon la revendication 10, **caractérisé en ce que** les couches de recouvrement sont elles aussi munies de sulfate de baryum, d'azurant optique et éventuellement de colorant bleu.

12. Film opaque blanc selon l'une quelconque des revendications 1 à 11, **caractérisé en ce qu'**il est muni au moins sur une face d'un revêtement résistant à la rayure, d'un copolyester ou d'un promoteur d'adhérence.

13. Procédé pour la fabrication d'un film opaque blanc selon l'une quelconque des revendications 1 à 12, selon le procédé d'extrusion, dans lequel la matière thermoplastique fondue dans une extrudeuse est compactée, extrudée à travers une filière plate et, sous forme de préfilm essentiellement amorphe, refroidie brusquement sur un cylindre refroidisseur, ensuite chauffée de nouveau et étirée dans le sens longitudinal et dans le sens transversal ou dans le sens transversal et dans le sens longitudinal ou bien dans le sens longitudinal, dans le sens transversal et encore une fois dans le sens longitudinal et/ou dans le sens transversal, **caractérisé en ce que** les températures d'étirage sont réglées dans une plage de $T_g$ + 10 K à $T_g$ + 60 K et **en ce que** le rapport d'étirage de l'étirage longitudinal est réglé dans la plage de 2 à 5, celui de l'étirage transversal est réglé dans la plage de 2 à 5 et celui du second étirage longitudinal éventuellement effectué est réglé dans la plage de 1,1 à 3.

14. Procédé selon la revendication 13, **caractérisé en ce que** le thermofixage du film s'effectue à des températures de four dans la plage de 200 à 260°C.

15. Procédé selon la revendication 13 ou 14, **caractérisé en ce que** les propriétés optiques (transparence) du film sont ajustées par variation de la température d'étirage longitudinal et/ou du rapport d'étirage longitudinal.

16. Utilisation d'un film selon l'une quelconque des revendications 1 à 12, pour des habillages intérieurs, pour le montage d'expositions et pour des articles d'exposition, pour des afficheurs, pour des panneaux, pour des étiquettes, pour des vitrages protecteurs de machines et de véhicules, dans le secteur de l'éclairage, dans la construction de magasins et de rayonnages, comme article publicitaire, comme milieu de contre-collage et dans des applications alimentaires.